(19) Europäisches Patentamt
European Patent Office
Office européen des brevets

(11) **EP 3 557 182 A1**

(12) **EUROPEAN PATENT APPLICATION**

(43) Date of publication:
**23.10.2019 Bulletin 2019/43**

(51) Int Cl.:
**G01B 11/24** (2006.01)　　　**G01B 11/00** (2006.01)

(21) Application number: **18168583.5**

(22) Date of filing: **20.04.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **CSEM Centre Suisse d'Electronique et de Microtechnique SA - Recherche et Développement 2002 Neuchâtel (CH)**

(72) Inventor: **Chebira, Amina 1004 Lausanne (CH)**

(74) Representative: **P&TS SA (AG, Ltd.) Av. J.-J. Rousseau 4 P.O. Box 2848 2001 Neuchâtel (CH)**

(54) **POSITIONING SYSTEM AND METHOD**

(57)　　A positioning system (1000) for determining a calibrated N degrees of freedom position of an object, N $\geq$ 3, comprising:
- M light source(s) (30, 32),
- P sensor(s) (20), configured to sense light emitted from the light source(s) (30, 32) or to sense shadow(s) cast on the sensor(s) (20) by light emitted from the light source(s) (30, 32),
wherein M = 1 if P $\geq$ 2, and M = 3 if P $\geq$ 1,
- a processor (50) configured to:
- determine 2D position(s) corresponding to each of the light source(s) (30, 32) based on the sensed light(s) or shadow(s); and

- a machine learning module (10) configured to:
- compute a N degrees of freedom position of the object, said object being or comprising said light source(s) (30, 32) or said sensor(s) (20), based on the 2D position(s).

　　This positioning system is adapted to applications requiring high accuracy and/or high precision, e.g. surgical applications.

Fig. 1

## Description

### Field of the invention

The present invention concerns a positioning system, in particular a positioning system in which a machine-learning module allows to compute the N degrees of freedom position (e.g. N = 3 or N = 6) of an object, this object being or comprising a light source or a sensor.

### Description of related art

In traditional positioning systems, a camera records the position of a set of points in the scene. These points can appear in the form of a predefined shape, e.g. a cross or a small ball whose center is computed or measured using conventional image processing and projective geometry techniques. Other known systems use point light sources instead of a set of points with a predefined shape, which makes the detection more robust. In general, a target, i.e. a body, in particular a rigid body, comprises these point light sources.

Known positioning systems can comprise a shadow sensor instead of a camera. In this context, a "shadow sensor" is a sensor comprising a mask and an imager, the mask having repetitive elements and a distinctive element: as the light from the light sources of the target passes through the mask, a shadow of the mask is cast on the imager. Preferably, the shadow sensor is the sensor as described in WO 2012/007561, filed by the applicant, the entirety of which is incorporated herein by reference. Each repetition of the elements contributes to the precision of the measurement. Preferably, the mask is parallel to the imager. Preferably, the shadow sensor comprises at least three repetitive elements in one direction and at least three repetitive elements in another different direction. The distinctive element can be constituted by an absence of a repetitive element.

Known positioning systems allow to determine the N degrees of freedom position of one or more light sources (N being an integer number at least equal to three) with respect to the position of a "sensor" (i.e. a camera or a shadow sensor). One example of this positioning system is described in the patent application EP3045932, filed by the applicant, the entirety of which is incorporated herein by reference.

In this context, the expression "nD position" indicates a n degrees of freedom position, wherein n is an integer number. For example, the expression "2D position" of an object indicates the two degrees of freedom position of this object. In other words, the position of the object is defined by two coordinates, e.g. (x, y). For example, the expression "3D position" of an object indicates the three degrees of freedom position of this object. In other words, the position of the object is defined by three coordinates, e.g. (x, y, z).

Another known positioning system reverses the traditional paradigm of the 3D or 6D position computation. In this positioning system, the position of interest is the position of at least one shadow sensor, and the reference coordinate is made of a plurality or constellation of light sources. This positioning system is described in the patent application EP3054311, filed by the applicant, the entirety of which is incorporated herein by reference.

In all of the above-mentioned positioning systems, a processor is configured to determine 2D positions corresponding to each light source based on the sensed light (in the case of a camera) or on the sensed shadow (in the case of a shadow sensor).

In this context, the term "processor" as used herein refers to any, or part of any, electrical circuit comprised of any number of electrical components, including, for example, resistors, transistors, capacitors, inductors, and the like. The circuit may be of any form, including, for example, an integrated circuit, a set of integrated circuits, a microcontroller, a microprocessor, a collection of discrete electronic components on a printed circuit board (PCB) or the like. The processor may also stand alone or be part of a computer used for operations other than processing sensed data. Implementation of these aspects may be hardware or software and may be realized in any number of electronic devices and/or applications, including but not limited to, personal computers, servers, mobile phones, and the like. It may comprise a set of one or more processors or may be a multi-processor core, depending on the particular implementation. A processor also may be embedded or integrated with other processors designed for a separate purpose, for example, as part of a central processing unit (CPU). It should be noted that this definition is non-limiting, and the examples are but only a few of many possible processors and implementations envisioned.

The positions determined by the processor are 2D positions associated with the camera or with the shadow sensor. Since the final position of the object must be determined with respect to a "world" or reference coordinate system, a conversion is required from the 2D position to the 3D position (e.g. x, y, z), or from the 2D position to the 6D position (x, y, z, pitch, roll and yaw), e.g. when the object can rotate, or if angles need to be determined with high accuracy.

Although the position conversions 2D → 3D and 2D → 6D are the most commonly used, other position conversions can be realised as well, for example and in a non-limiting way the position conversion 2D → 4D. For this reasons, in the following the expression "N degrees of freedom position of an object" is used, wherein N is an integer number at least equal to three.

For the position conversion (2D → ND), a mathematical model of the sensor (camera or shadow sensor), which mathematically describes a position production process, is normally used.

Several mathematical sensor models are known. When the sensor is a camera, each mathematical model has common camera parameters, such as, for example, a position and an orientation of the camera (external parameters), a focal length and an optical center (internal parameters). In the case of a shadow sensor, those parameters comprise the center of the mask and that of the shadow sensor, the refraction index of the glass of the mask, the thickness of the glass and of the air between the glass and the shadow sensor, etc.

Generally, those sensor parameters and/or the models themselves, if not correctly estimated or determined, generate errors in the computed position of the object. Those errors can be avoided if a calibration step is performed. In other words, since the computing of the ND position of the object is achieved by using the mathematical sensor model, the precision and the accuracy of the computed position is influenced by the sensor parameters of the mathematical sensor model and/or by the model itself. For example, the fact that a shadow sensor can be modelled as a pinhole camera can introduce inherent errors in the position computing.

The calibration step is really important in particular applications, wherein the accuracy and/or the precision of the computed position are crucial. We refer for example and in a non-limiting way to surgical applications: in those applications, the accuracy of the computed position is really important, in particular when the computed position is the position of a surgical tool for example with respect to the patient.

Although the two words precision and accuracy can be synonymous in colloquial use, in this context they have a different meaning. The accuracy indicates the difference between the real position of the object and the measured position of the same object. The precision gives an indication of the repeatability of the measured position and it is associated to a statistical parameter of the measured position, e.g. its variance. In other words, the accuracy is a degree of closeness of the computed position to that position's true value. The precision is related to the closeness of the various measurements, and is the degree to which repeated measurements under similar conditions and for the same positions show the same results.

Generally, the aim of the calibration step is not necessarily to determine the intrinsic and/or extrinsic sensor parameters, but rather to avoid or correct the errors of the position computing step because those parameters were not perfectly estimated and/or because the models themselves were inaccurate.

Different ways for correcting those errors are known in the state of the art. For example, it is possible to provide complex sensor model containing distortion models, which describe the distortion provided by the sensor.

It is also known to build a look up table ("LUT" in the following), for example by using a rotary encoder as a reference. The LUT will then serve to correct the 2D position (x, y) of each light source before it is fed to the processor computing the ND position of the object. In this case, the building of the LUT is performed off-line, i.e. before run or working step ("on-line" step) in which the positioning system computes the ND position of the object, by using this LUT.

The document US5617490 describes a calibration system comprising one light source, one pin-hole camera and a neural network. The neural network is a multi-layered perceptron used for calibrating the system, in particular for mapping 2D coordinates (u, v) associated with the camera in order to obtain improved 2D coordinates (u', v'). The neural network is not used to compute the ND position of an object.

The document US5832106 describes a calibration system comprising one laser beam source, one camera and a neural network. The neural network is a multilayer perceptron neural network used for calibrating the system, in particular for mapping 3D coordinates (x, y, z) of a point in the space to other 3D coordinates (u, v, θ) obtained by the camera (u, v: coordinates of the corresponding point projected onto a 2D image, θ: radiation angle). The mentioned applications (i.e. cameras mounted to robot vision system units adapted for the three-dimensional object recognition or distance measurement) do not require a measurement with high accuracy. Moreover, the 3D →3D mapping performed by the described neural network is not too accurate.

Moreover, the same document US5832106 indicates that "a more accurate learning can be executed by selecting a larger number of control points or corresponding points at various distances. In this case, however, an increased processing time is required". Therefore, this document discourages the skilled person to increase the number of points. In this context, a "point" indicates the location of a light source in the space.

An aim of the present invention is to provide a positioning system which can compute a more accurate and/or precise ND position of an object.

An aim of the present invention is to provide a positioning system adapted to applications requiring high accuracy and/or high precision, e.g. surgical applications.

An aim of the present invention is to provide a positioning system wherein the number of used points is larger than known solutions.

An aim of the present invention is to provide a positioning system in which the calibration step is performed in an alternative way with regard to the known solutions.

Brief summary of the invention

According to the invention, these aims are achieved by means of a positioning system according to claim 1 and by means of a positioning method according to claim 16.

The positioning system according to the invention comprises M light source(s), and P sensor(s), configured to sense light emitted from the light source(s) or to sense shadow(s) cast on the sensor(s) by light emitted from the light source(s).

The sensor can be a camera, e.g. a pin-hole camera. In the literature, a pinhole camera indicates a camera made of a box with a single small aperture (the pinhole) wherein light from a scene passes through this aperture and projects an image on the opposite side of the box. In a pin-hole camera, the output of the camera needs to be inverted with respect to the scene.

The sensor can be in alternative a "projective camera", wherein the output of the camera needs not to be inverted with respect to the scene.

The sensor can be in alternative a shadow sensor according to the definition given here above.

Each light source according to the invention is a punctual light source, i.e. it can be approximated as a mathematical point. For example, the ratio between the largest dimension of the light source and the working distance (i.e. the distance between the light source and a sensor) is small enough so that the light source can be approximated by a point. The light source according to the invention can comprise integrated optical components. In one preferred embodiment, the dimension of the light source without considering those optical components is less than 5 mm, preferably less than 1 mm. A non-limitative example of a light source according to the invention is a LED.

In another embodiment, the light source is a passive light source, e.g. a reflective element.

M and P are integer numbers: M is equal to at least one if P is equal to at least two, and M is equal to at least three if P is equal to at least one.

The positioning system according to the invention comprises a processor that, as in the known solutions, is configured to determine 2D position(s) corresponding to each of the light source(s) based on the sensed light(s) or shadow(s).

In one embodiment, the processor is located inside the sensor (i.e. inside the camera or the shadow sensor), and it is configured to compute the 2D positions (x, y) of each light source.

In another embodiment, the processor is an external processor, i.e. it does not belong to the sensor.

The positioning system according to the invention advantageously comprises a machine-learning module configured to compute a ND position of an object based on the determined 2D positions. The object can be or can comprise the light source(s) ("traditional paradigm") or the sensor(s) ("reversed paradigm").

In this context, the expression "machine-learning module" indicates a module which needs to be trained in order to learn i.e. to progressively improve a performance on a specific task while being trained.

The machine-learning module is generally trained during a training step, generally performed offline, i.e. before the running of the positioning system (i.e. before the "online" step), by using training data, i.e. physical points.

In one preferred embodiment, it could also be trained during the running of the system, by using the measured positions computed by the system during its running.

The training step is preceded by a data point acquisition step, during which data points are acquired. In particular, a target comprising the light sources is moved in a predetermined volume stepwise in each of the three directions x, y, z. For each step and for each light source, a data point is acquired. The number of the acquired data points depends on the volume and on the desired accuracy of the system. This number is usually higher than the number of the acquired data points for a known calibration method using LUT.

The time of the data point acquisition step performed offline for a machine learning module is longer than the time of the data point acquisition step of a known calibration method using LUT. However, the accuracy of the positions computed by this machine learning module is improved by at least one order of magnitude with regard to the accuracy obtained by a system using LUT for its calibration. The machine learning module can belong to the above-mentioned processor or to another distinct processor. This distinct processor can be located inside the sensor (i.e. inside the camera or the shadow sensor), or it can be an external processor, i.e. it does not belong to the sensor.

Since a machine-learning module is directly used to compute the ND position (e.g. 3D or 6D position) of the object starting from the 2D position(s) corresponding to each of the light source(s), this ND position is automatically calibrated, without the necessity to perform a calibration step before the measurements. In other words, a traditional calibration step e.g. using LUT, could be performed but it is not more necessary.

In one preferred embodiment, a calibration using LUT is used in combination with a calibration using a machine-learning module: for example, the LUT allows in this case to correct for coarse errors (e.g. fixed offsets).

Since a machine-learning module is directly used to compute the ND position of the object starting from the 2D position(s) corresponding to each of the light source(s), the positioning system according to the invention is well adapted to applications requiring high accuracy and/or high precision, as surgical applications.

In one preferred embodiment, the sensor is a single sensor and the number of light sources is equal to four. In this case, the input of the machine-learning module comprises the 2D position of each light source, i.e. two coordinates for each of the four light sources, i.e. eight coordinates in total.

In one preferred embodiment, the sensor is a double sensor (i.e. it comprises two single sensors), and the number of light sources is equal to four. In this case, the input of the machine-learning module comprises at least the 2D position of each light source for each sensor, i.e. two coordinates for each of the four light sources for each of the two sensors, i.e. sixteen coordinates in total.

In the case of a stereo sensor, if the position of a sensor with regard to the other is not well known, it can be computed. In this case the machine-learning module of the system according to the invention is a first machine-learning module, and the system according to the invention further comprises a second machine-learning module (different from the first) arranged to compute the position, in particular the 6D position, of one sensor of the stereo sensor with regard to the other sensor of the stereo sensor. The input of this second machine-learning module comprises the sensor parameters of the two sensors of the stereo sensor and a few data points, and its output comprises the position of one sensor of the stereo sensor with regard to the other sensor of the stereo sensor.

In another preferred embodiment, the sensor is a single sensor and the number of light sources is equal to five. In this case, the input of the machine-learning module comprises the 2D position of each light source, i.e. two coordinates for each of the five light sources, i.e. ten coordinates in total.

In another preferred embodiment, the sensor is a double sensor and the number of light sources is equal to five. In this case, the input of the machine-learning module comprises at least the 2D position of each light source for each sensor, i.e. two coordinates for each of the five light sources for each of the two sensors, i.e. twenty coordinates in total. Also in this case, if the position of a sensor with regard to the other is not well known, it can be computed by the above-mentioned second machine-learning module.

The above-mentioned embodiments can be generalised as follows:

- The sensor can be a single sensor and the number of light sources is equal to Q, Q being an integer number at least equal to three. In this case, the input of the machine-learning module comprises the 2D position of each light source, i.e. two coordinates for each of the Q light sources, i.e. $(2 \cdot Q)$ coordinates in total.
- The sensor can be a double sensor and the number of light sources is equal to Q. In this case, the input of the machine-learning module comprises at least the 2D position of each light source for each sensor, i.e. two coordinates for each of the Q light sources for each of the two sensors, i.e. $(2 \cdot 2 \cdot Q)$ coordinates in total. In this case, if the position of a sensor with regard to the other is not well known, it can be computed by the above-mentioned second machine-learning module.

Those embodiments comprise a large number of data points, each data point being defined by N coordinates. However, the applicant has discovered that surprisingly that does not compromise the convergence of the neural network. Moreover, the processing time of the machine-learning module available nowadays which is necessary to compute a ND position starting from this large number of points is acceptable. In addition, the usage of the machine-learning module has improved the accuracy by at least one order of magnitude compared to using conventional methods.

In one preferred embodiment, the system comprises several light sources. In this embodiment, a first sub-set of the light sources lie on a first plane, and a second sub-set of the light sources (different from the first sub-set) lie on a second plane different from the first plane, the second subset comprising at least one light source. It must be noted that the first and second planes are not necessarily physical planes but mathematical concepts used for indicating that the light sources of the first sub-set share a coordinate (e.g. the z coordinate in a Cartesian reference system; in this case we can assume that $z = z_1$), the light sources of the second sub-set share a coordinate (in this case we can assume that $z = z_2$) which is different from the same coordinate of the light sources of the first sub-set ($z_1 \neq z_2$).

This configuration allows to optimize the computing of the ND object position. For example, in such embodiment, the light sources of the first sub-set lying on the first plane can be used to compute a first estimate of the ND position of the object. Once the estimate of the ND position is available, this position can be optimized using the light source(s) of the second sub-set.

In a preferred embodiment, the light sources are placed on a target in an optimal configuration. This configuration is "optimal" as it is the most stable and the most robust to external perturbations during the position computing, due e.g. to the contrast and/or to the light of the environment in which the system according to the invention is placed. In this embodiment, the x and y coordinates of the light sources on the target are given by the following formula:

$$x = r \cdot \sin(2\,\pi k/M)$$

$$y = r \cdot \cos(2\,\pi k/M)$$

wherein

M is the number of light sources,
r is the radius defined as the distance of the light sources to the barycentre of a target comprising the light sources, and
k is an integer number belonging to the range {0, ...., M - 1}.

In this optimal configuration, the light sources are disposed in multi-points star configuration. In this configuration, in a preferred embodiment, at least one light source (does not matter which one) lies in a plane different from the plane in which the remaining light sources lie.

In this optimal configuration, the radius r of the target can be chosen depending on the application. The distance between the two planes of the light sources depends on the application and/or on the chosen radius. In one preferred embodiment, the radius is in the range 10 mm - 50 mm, e.g. 15 mm. In one preferred embodiment, the distance is in the range 1 mm - 20 mm, e.g. 5 mm.

If the positioning system according to the invention comprises a target, the target comprising the light source(s), the positioning system can be arranged to compute a ND position of the target.

In another embodiment, the target can have L-shape, i.e. it can comprise a first arm and a second arm substantially perpendicular to the first arm.

In one embodiment, if the sensor is a shadow sensor, the processor is further configured to determine the two degrees of freedom position(s) of a projection of points, a projection of a point being a projection of the shadow image on the image sensor into one dimension. A projection of a point is therefore a 1D vector, in particular a vector comprising one column. In particular, two 1D projections are computed: each row of the first projection results from summing the pixels of the corresponding rows of the shadow image ($1^{st}$ projection or vector $V_x$) and each row of the second projection results from summing the pixels of the corresponding columns of the shadow image ($2^{nd}$ projection or vector $V_y$).. The projections of points contain redundant information. In this embodiment, the input of the machine-learning module is then the projections of points. In this case, the computing of the ND position of the object by the machine-learning module is performed more accurately, as it exploits the redundancy of the projections. Moreover, the projections do not carry the errors from the shadow sensor mathematical mode.

In one preferred embodiment, for evaluating the accuracy of the positioning system, a target comprising the light sources is placed on a stage and the sensor observes the target at a working distance. In one embodiment, the working distance is in the range 100 mm - 200 mm, e.g. 140 mm. The stage is then moved in a given volume, e.g. a parallelepiped, with a given step in every direction. In one preferred and not-limitative embodiment, the dimension of this parallelepiped are 60 mm × 110 mm × 110 mm. In one preferred and not-limitative embodiment, the step is of 1 mm.

For each (x, y, z) position of the stage defined as a data point, the corresponding ND position of the target is computed. In one embodiment, only one measurement is taken per light source. This can result in more than 960'000 data points in the given volume.

In one preferred embodiment, the machine-learning module is a supra machine-learning module, and the M light source(s), and the P sensor(s) belong to the given volume mentioned above. In this embodiment, this given volume can be subdivided in several sub-volumes. The positioning system further comprises several local machine-learning modules, one for at least one sub-volume, each local machine-learning module being configured to compute a ND position of the object, based on the determined 2D positions. The supra machine-learning module is arranged to learn which sub-volume it should select. In other words, the supra machine-learning module performs in a first step a coarse positioning and then, in a second step after the first step, the local machine-learning module corresponding to the selected sub-volume performs a fine positioning.

Advantageously in this embodiment, the accuracy of the position of the object computed by the local machine-learning modules is in most of the cases, especially for large volumes, higher than the accuracy of the position of the object computed by the machine-learning module comprising the entire given volume.

This embodiment improves the convergence of the system to a good ND position of the object. Moreover, this embodiment allows to exploit local machine-learning modules having a smaller size (in the case of a neural network module, e.g. a smaller number of nodes and/or of hidden layers) and therefore they will converge faster. Moreover, they can be run in parallel.

In another preferred embodiment, for evaluating the precision of the positioning system, a target comprising the light sources is placed on a stage and the sensor observes the target at a working distance. In one embodiment, the working distance is about 200 mm. The stage is then moved in a given plane in the z plane of the sensor, e.g. in a square, with a given step in every direction. In one preferred and not-limitative embodiment, the dimensions of this square are 110 mm × 110 mm. In one preferred and not-limitative embodiment, the step is of 10 mm. For each point, the measurements are repeated a number of times, e.g. 100 to 1000 times.

The machine-learning module in a preferred embodiment is a neural network module, i.e. a module comprising a network of elements called neurons. Each neuron receives input and produces an output depending on that input and an "activation function". The output of certain neurons is connected to the input of other neurons, thereby forming a weighted network. The weights can be modified by a process called learning which is governed by a learning or training function.

Although the neural network module is a preferred implementation of the machine-learning module, the positioning system according to the invention is not limited to the use of a neural network module only, but could comprise other types of machine-learning modules, e.g. and in a non-limiting way machine-learning modules arranged to implement at least one of the following machine-learning algorithms: decision trees, association rule learning, deep learning, inductive logic programming, support vector machines, clustering, Bayesian networks, reinforcement learning, representation learning, similarity and metric learning, sparse dictionary learning, genetic algorithms, rule-based machine-learning, learning classifier systems.

In one embodiment, the neural network module is a deep neural network module, e.g. it comprises multiple hidden layers between the input and output layers, e.g. at least three layers.

In one preferred embodiment, it comprises three hidden layers, each layer having a different number of neurons. In one embodiment, the number of neurons of the hidden layers decreases from the input to the output.

In one particular and not-limitative embodiment, the number of neurons per layer is comprised in the range 30 - 100.

The time for training a deep neural network module with a number of data points is longer than the time for training a multi-layered perceptron module with the same number of data points (e.g. one day vs several days). However, the accuracy obtained by the deep neural network module is improved with regard to the accuracy obtained by a multi-layered perceptron module.

In one embodiment a ReLu or rectifier function $(f(x) = \max(0, x)$, where x is the input of a neuron) is used as activation function, in order to improve the performance of the machine learning module (i.e. the machine learning module is more efficient, it converges faster and/or it is more accurate.

However, other activation functions can be used as well, for example and in a non-limiting way sigmoid functions, tan functions, tanh functions, tansigmoid functions, etc.

In one embodiment, a Bayesian regression is used as a training function allows to optimise the accuracy of the computed ND position as well as make the training step more efficient.

In the same way, other training functions can be used as well, for example and in a non-limiting way gradient descendent functions, etc.

Tests performed by the applicant have also shown that the accuracy of the position of the computed ND position does not significantly worsen if the number of training points is significantly reduced. For example, by using only the 1% of the possible 960'000 training points mentioned above instead of the 70%, the mean of the absolute accuracy measured by the L2 norm is 0.0266 mm (with 0.0195 mm standard deviation) instead of 0.0234 mm (with 0.0153 mm standard deviation).

The present invention further concerns a positioning method for determining a calibrated N degrees of freedom position of an object, N being an integer number at least equal to three,

the positioning system comprising:

- M light source(s),
- P sensor(s), configured to sense light emitted from the light source(s) or to sense shadow(s) cast on the sensor(s) by light emitted from the light source(s),

wherein M and P are integer numbers, M is equal to at least one for P being equal to at least two, and M is equal to at least three for P being equal to at least one,

- a processor,

- a machine-learning module;

the method comprising the following steps:

- determining by the processor two degrees of freedom position(s) corresponding to each of the light source(s) based on the sensed light(s) or shadow(s);
- computing by the machine-learning module a N degrees of freedom position of the object, the object being or comprising the light source(s) or the sensor(s), based on the determined 2D positions.

Although this invention has been described with regard to light signals, according to an independent aspect it could be used also with other kinds of signals, including for example audio signals, RF signals, etc.

Brief description of the drawings

The invention will be better understood with the aid of the description of an embodiment given by way of example and illustrated by the figures, in which:

Fig. 1 shows a block diagram of a positioning system according to one embodiment of the invention.

Fig. 2 shows a cut section of one embodiment of the sensor of the positioning system according to the invention, the sensor being in this embodiment a shadow sensor.

Fig. 3A shows a top view of one embodiment of the mask of the shadow sensor of Fig. 2.

Fig. 3B shows a top view of another embodiment of the mask of a shadow sensor.

Fig. 4 shows a schematic view of one embodiment of the machine-learning module of the positioning system according to the invention.

Fig. 5 shows another schematic view of one embodiment of the machine-learning module of the positioning system according to the invention.

Fig. 6 shows a schematic view of one embodiment of two machine-learning modules of the positioning system according to the invention.

Fig. 7 shows another schematic view of one embodiment of the machine-learning module of the positioning system according to the invention.

Fig. 8A shows a perspective and schematic view of an experimental setup for one embodiment of the positioning system according to the invention.

Fig. 8B shows a perspective view of a volume in which a stage comprising a target of the positioning system according to one embodiment of the invention can be moved.

Fig. 9A shows a top view of one embodiment of the target comprising the light sources of the positioning system according to the invention.

Fig. 9B shows a lateral view of the target of Fig. 9A.

Fig. 10 shows a bi-dimensional graphic showing the position of five light sources on a target in the optimal configuration of one embodiment of the positioning system according to the invention.

Figs. 11A to 11D show in a schematic way four possible configurations of the positioning system according to the invention.

Detailed description of possible embodiment(s) of the invention

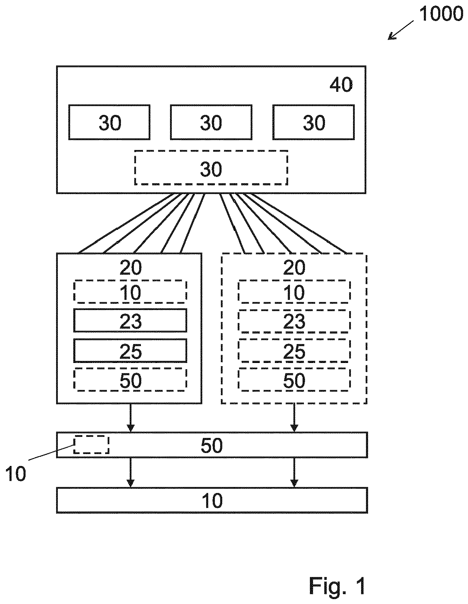

Fig. 1 shows a block diagram of a positioning system 1000 according to one embodiment of the invention. The positioning system 1000 of Fig. 1 comprises at least one sensor 20 if the number of light sources 30 is at least three, or at least two sensors 20 if the number of light sources 30 is at least one.

Each sensor 20 is configured to sense light emitted from the light source(s) 30 or to sense shadow(s) cast on the sensor(s) by light emitted from the light source(s) 30.

In the embodiment of Fig. 1, the sensors 20 of the system according to the invention are advantageously shadow sensors.

As illustrated in Fig. 1, each shadow sensor 20 may comprise a mask 23, an imager 25 and a processor 50.

In one preferred embodiment, the mask 23 is composed of repetitive patterns and of a distinctive element, for example, a form of a grating. In this way, as light from a light source 30 passes through the mask 23, a distinct shadow pattern is cast on the imager 25 behind the mask 23 in accordance with the position of the sensor 20 with respect to the light source 30 and the pattern of the mask 23.

By using a repetitive pattern for the mask 23, the precision of the sensor 20 may be increased by improving the measurement of the sensed pattern. By recording the shadow of the mask 23 cast by each light source 30 on the imager 25, and by properly multiplexing the light sources 30, the system can compute the ND position of the target 40 comprising the light sources 30 with respect to the shadow sensor(s) 20 or vice-versa.

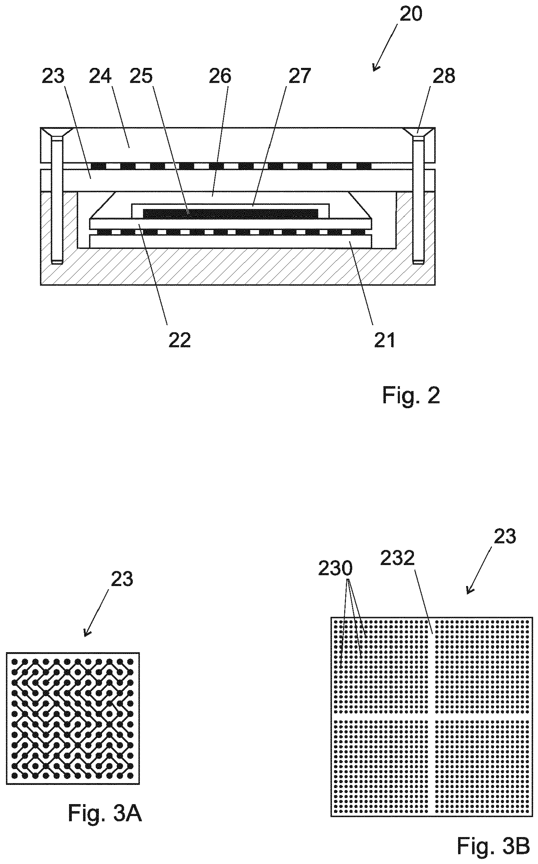

Fig. 2 shows a cut section of one embodiment of a shadow sensor 20: it comprises a mask 23, a filter 24, an imager 25, a sensor glass 26, a sensor air gap 27, a PCB 21 and a sensor package 22. A mechanical assembly 28 guarantees the connection of the different elements of the shadow sensor 20.

Figs. 2A and 3B show examples of a mask 23 for the shadow sensor 20. In those embodiments, the repetitive pattern of the mask 23 is a checkerboard engraved on piece of glass. In other embodiments, not illustrated, the mask 23 comprises a set of micro-lenses. In practice, if looked at in a small scale, a regular mask does not generate a strictly regular shadow.

Shadow sensors will be not described here in further details. Those details are described in WO 2012/007561, filed by the applicant, the entirety of which is incorporated herein by reference.

In another alternative embodiment, not illustrated, the sensor 20 is a camera, e.g. a pin-hole camera or a projective camera.

The light source 30 according to the invention is a punctual light source, i.e. it can be approximated as a mathematical point. A non-limitative example of a light source 30 according to the invention is a LED.

In another embodiment, not illustrated, the light source 30 is a passive light source, e.g. a reflective element.

The same positioning system 1000 can comprise at the same time active and passive light sources 30.

The same positioning system 1000 can comprise at the same time a camera and a shadow sensor.

The positioning system 1000 of Fig. 1 comprises a processor 50 configured to determine 2D position(s) corresponding to each of the light source(s) 30 based on the sensed light(s) or shadow(s).

In one embodiment, illustrated in Fig. 1 with a dotted line, the processor 50 is located inside the sensor 20 (i.e. inside the camera or the shadow sensor), and it is configured to compute the 2D positions (x; y) of each light source 30.

In another embodiment, illustrated in Fig. 1 with a continuous line, the processor is an external processor 50, i.e. it does not belong to the sensor 20.

The positioning system of Fig. 1 comprises also a machine-learning module 10 configured to compute a N degrees of freedom position of an object based on the determined 2D positions. The object can be or can comprise the light source(s) ("traditional paradigm") or the sensor(s) ("reversed paradigm").

In one embodiment, illustrated in Fig. 1 with a continuous line, the machine-learning module is an external module 10, i.e. it does not belong to the sensor 20 nor to processor 50.

In one embodiment, alternative or complementary to the previous one and illustrated in Fig. 1 with a dotted line, the machine-learning module 10 belongs to the processor 50.

In one embodiment, alternative or complementary to the previous ones and illustrated in Fig. 1 with a dotted line, the machine-learning module 10 belongs to the sensor 20.

In another embodiment, not illustrated in Fig. 1, the machine-learning module 10 belongs to the processor 50 of the sensor 20.

The machine-learning module 10 is directly used to compute the ND position (e.g. 3D or 6D position) of the object starting from the 2D position(s) corresponding to each of the light source(s) 30. Therefore, this ND position is automatically calibrated, without the necessity to perform a calibration step before the measurements. In other words, a traditional calibration step e.g. using LUT, could be performed but it is not more necessary.

It is necessary to train the machine-learning module 10 during a training step with a number of samples or training data, as will be discussed later. However, the training step is not necessarily a step preceding the run or working step of the positioning system 1000: in fact, the training step could be performed at the same time of the run or working step ("on-line" step) of the positioning system 1000.

If the training step has been performed once the positioning system is in use, the training could be continued during the running of the system. Namely, from time to time, some computed points are taken and added to the training set so as to re-train the system. This has the advantage of potentially improving the accuracy and/or the precision of the system over time.

Since a machine-learning module 10 is directly used to compute the ND position of the object starting from the 2D position(s) corresponding to each of the light source(s) 30, the positioning system 1000 is well adapted to applications requiring high accuracy and/or high precision, as surgical applications.

For example, it could be used for determining the position of a surgical tool and/or of a patient on which a target comprising the light sources has been placed.

Although the embodiment of Fig. 1 comprises a limited number of light sources 30 and sensors 20, the positioning system 1000 according to the invention can be generalized according to one of the two following embodiments:

- A single sensor 20 and Q light sources 30, Q being an integer number at least equal to three. In this case, the input of the machine-learning module 10 comprises the 2D position of each light source 30, i.e. two coordinates for each of the Q light sources 30, i.e. $(2 \cdot Q)$ coordinates in total.

- A double sensor 20 and Q light sources. In this case, the input of the machine-learning module 10 comprises at least the 2D position of each light source 30 for each sensor 20, i.e. two coordinates for each of the Q light sources for each of the two sensors, i.e. $(2 \cdot 2 \cdot Q)$ coordinates in total. In this case, if the position of a sensor with regard to the other is not known, it can be computed by a second machine-learning module (not illustrated).

This second machine-learning module is arranged to compute the position, in particular the 6D position, of one sensor of the stereo sensor with regard to the other sensor of the stereo sensor. The input of this second machine-learning module comprises the sensor parameters of the two sensors of the stereo sensor, a few data points and its output comprises the position of one sensor of the stereo sensor with regard to the other sensor of the stereo sensor.

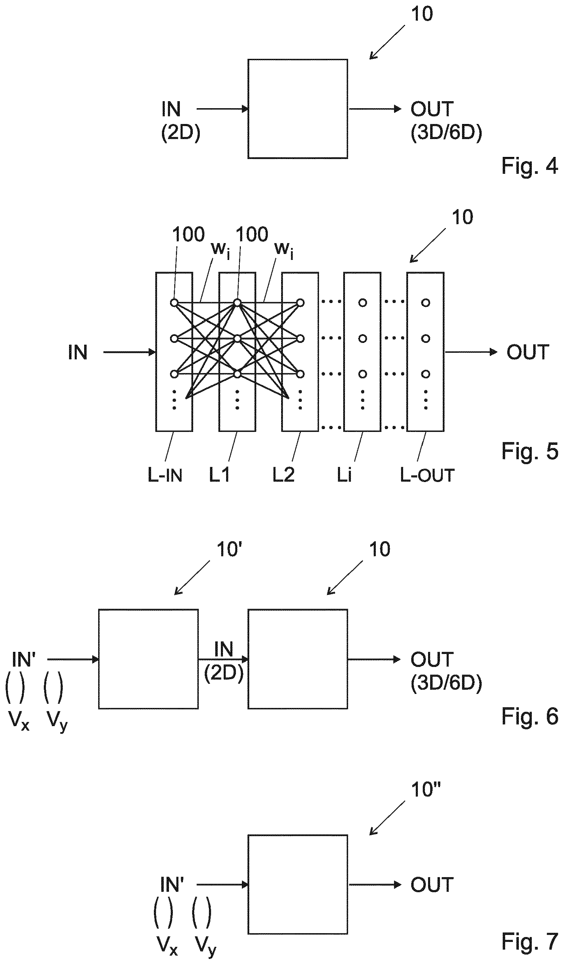

Fig. 4 shows a schematic view of one embodiment of the machine-learning module 10 of the positioning system according to the invention. In this embodiment, it receives as an input IN the 2D positions of the light sources and produces as an output OUT the ND position, e.g. a 3D or a 6D position, of an object.

Fig. 5 shows another schematic view of one embodiment of the machine-learning module 10 of the positioning system according to the invention.

In this embodiment, the machine-learning module 10 is a neural network module, i.e. a module comprising a network of elements called neurons 100. Each neuron 100 receives one or more inputs and produces an output depending on that input(s) and an "activation function". The output of certain neurons is connected to the input of other neurons, thereby forming a weighted network. The weights $\varpi_i$ can be modified by a process called learning which is governed by a learning or training function.

In the embodiment of Fig. 5, the neural network module 10 is a deep neural network module, i.e. it comprises multiple hidden layers L1, L2, ... Li between the input layer L-IN and output layer L-OUT.

In one preferred embodiment, not illustrated, the neural network module 10 comprises three hidden layers, each layers having a different number of neurons. In one embodiment, the number of neurons of the hidden layers decreases from the input to the output.

In one particular and not-limitative embodiment, the number of neurons per layer is comprised in the range 30 - 100.

In one embodiment a ReLu or rectifier function $(f(x) = \max(0, x)$, where x is the input of a neuron) is used as activation function and a Bayesian regression is used as a training function allowing to improve the performance of the machine learning module.

Fig. 6 shows a schematic view of one embodiment of two machine-learning modules of the positioning system according to the invention. This embodiment applies if the sensor of the positioning system is a shadow sensor 20. In such case, the processor 50 is further configured to determine the 2D position(s) corresponding to each of the light source(s) starting from a projection of points, a projection of a point being a projection of the shadow image on the image sensor into one dimension. In particular, the processor 50 is configured to determine those 2D position(s) starting from two vectors $V_x$ and $V_y$, each vector representing the projections of the shadow image on one of the two axis x, y of the shadow sensor.

By doing so, the processor 50 can introduce errors. In the embodiment of Fig. 6, those errors are compensated by using a second machine-learning module 10', arranged to compute the 2D position(s) corresponding to each of the light source(s) based on the vectors $V_x$ and $V_y$.

The output of this second machine-learning module 10' is then fed as an input IN to the machine-learning module 10, whose output OUT will be the ND position of the object.

Fig. 7 shows another schematic view of one embodiment of the machine-learning module of the positioning system according to the invention. In this case, the machine-learning module 10" combines the machine-learning modules 10, 10' of Fig. 6, as it allows to compute the ND position of the object directly from the vectors $V_x$ and $V_y$, thereby compensating at once the errors related to the computing step from the vectors $V_x$ and $V_y$ to the 2D position(s) corresponding to each of the light source(s), and the errors related to the computing step from the 2D position(s) to the ND position of the object.

Although the neural network module is a preferred implementation of the machine learning module, the positioning system according to the invention is not limited to the use of a neural network module only, but could comprise other types of machine learning modules, e.g. and in a non-limiting way machine learning modules arranged to implement at least one of the following machine learning algorithms: decision tree, association rule learning, deep learning, inductive logic programming, support vector machines, clustering, Bayesian networks, reinforcement learning, representation learning, similarity and metric learning, sparse dictionary learning, genetic algorithms, rule-based machine learning, learning classifier systems.

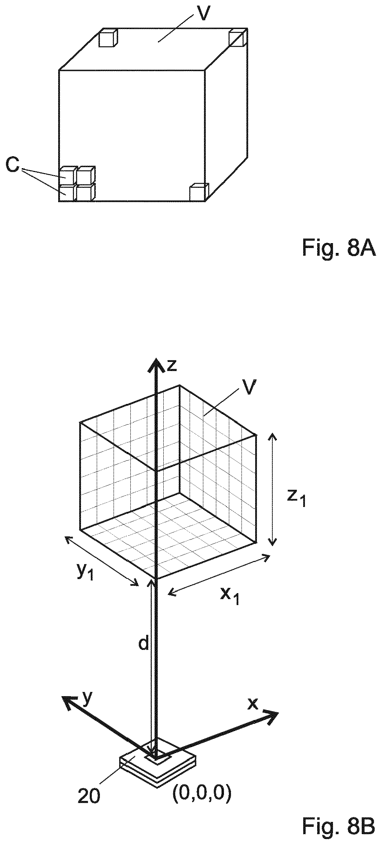

Fig. 8A shows a perspective and schematic view of an experimental setup for one embodiment of the positioning system according to the invention. In this embodiment, for evaluating the accuracy of the positioning system 1000, a target 40 (not illustrated) comprising the light sources (not illustrated) is placed on a stage (not illustrated) and the sensor 20 observes the target at a working distance d.

In one embodiment, the working distance d is in the range 100 mm - 200 mm, e.g. 140 mm. The stage is then moved in a given volume V, e.g. a parallelepiped, with a given step in every direction x, y, z.

Fig. 8B shows a perspective view of such a volume V, in which a stage comprising a target comprising the light sources of the positioning system according to one embodiment of the invention can be moved.

In one preferred and not-limitative embodiment, the dimensions $x_1 \times y_1 \times z_1$ of this parallelepiped are 60 mm $\times$ 110 mm $\times$ 110 mm. In one preferred and not-limitative embodiment, the step in every direction x, y, z is of 1 mm.

For each (x, y, z) position of the stage, the corresponding ND position of the target is computed. In one embodiment, only one measurement is taken per light source. This can result in more than 960'000 points in the given volume.

In one preferred embodiment, the machine-learning module is a supra machine-learning module, and the M light source(s), and the P sensor(s) belong to the given volume V mentioned above. In this embodiment, this given volume can be subdivided in several sub-volumes C, visible for example in Fig. 8B. The positioning system further comprises several local machine-learning modules, one for at least one sub-volumes C, each local machine-learning module being configured to compute a ND position of the object, based on the determined 2D positions.

The supra machine-learning module is arranged to learn which sub-volume it should select. In other words, the supra machine-learning module performs in a first step a coarse positioning and then, in a second step after the first step, the local machine-learning module corresponding to the selected sub-volume performs a fine positioning.

Advantageously in this embodiment, the accuracy of the position of the object computed by the local machine-learning modules is higher than the accuracy of the position of the object computed by the supra machine-learning module.

This embodiment improves the convergence of the system to a good ND position of the object. Moreover, this embodiment allows to exploit local machine-learning modules having a smaller size (e.g. a smaller number of nodes) and therefore they will converge faster and can be run in parallel.

Tests performed by the applicant have also shown that the accuracy of the position of the computed ND position does not significantly worsen if the number of training points (data points) is significantly reduced. For example, by using only the 1% of the possible 960'000 training points mentioned above instead of the 70%, the mean of the absolute accuracy measured by the L2 norm is 0.0266 mm (with 0.0195 mm standard deviation) instead of 0.0234 mm (with 0.0153 mm standard deviation).

In this context, the absolute accuracy is defined as the average norm of the point-wise difference between the measured and the reference data points. The norm can be a L1 norm or a L2 norm.

A relative accuracy could also be defined as based on the absolute value of difference between the distance of an initial point to all the other points in the reference volume and the distance of the initial point to all the other points in the output of the machine-learning module.

In one embodiment, the ND position computed with the positioning system according to the invention has an absolute accuracy less than 80 $\mu$m, e.g. less than 50 $\mu$m, e.g. less than 30 $\mu$m.

In one embodiment, the ND position computed with the positioning system according to the invention has a precision belonging to the range 0 $\mu$m to 2 $\mu$m.

This range of precision has been measured by using a single sensor, in particular a shadow sensor.

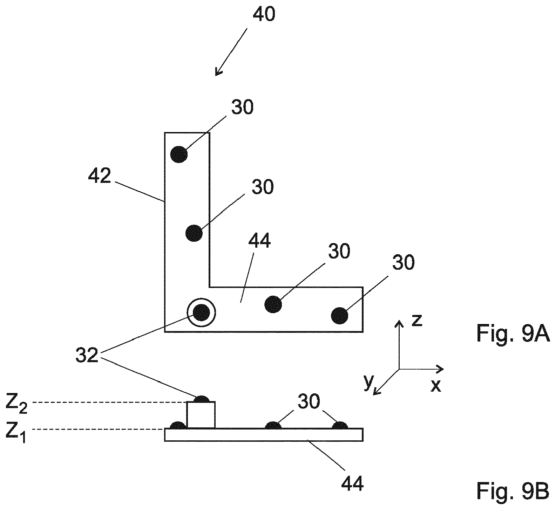

Fig. 9A shows a top view of one embodiment of the target 40 comprising the light sources 30 of the positioning system according to the invention. Fig. 9B shows a lateral view of the target 40 of Fig. 9A.

In the embodiment of Figs. 9A and 9B, a first sub-set of the light sources 30 lie on a first plane, and a second sub-set of the light sources (different from the first sub-set) lie on a second plane different from the first plane, the second subset comprising at least one light source 32. In this embodiment, the light source 32 of the second sub-set has $z = z_2$ which is different from the same coordinate of the light sources 30 of the first subset $z_1$.

This configuration allows to optimize the computing of the ND object position. For example, in such embodiment, the light sources 30 of the first sub-set lying on the first plane can be used to compute a first estimate of the ND position of the object. Once the estimate of the ND position is available, this position can be optimized using the at least one light source 32 of the second sub-set.

The target 40 of Fig. 9A comprises the light sources of the positioning system according to the invention. In this case, the target 40 has a L-shape, i.e. it comprises a first arm 42 and a second arm 44 substantially perpendicular to the first arm. In one embodiment (not illustrated) the target also comprise an oblique side between the first arm 42 and the second arm 44.

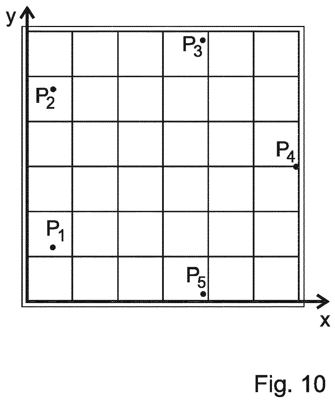

At least one of the LED of the target 40 of Fig. 10 is placed in a plane different from the plane of the remaining LEDs.

Fig. 10 shows a bi-dimensional graphic showing the positions $P_1$ to $P_5$ of five light sources on a (not illustrated) target in the optimal configuration of one embodiment of the positioning system according to the invention.

This configuration is "optimal" as it is the most stable and the most robust to the noise during the position computing. In this embodiment, the x and y coordinates of the light sources on the target are given by the following formula:

$$x = r \cdot \sin(2\pi k/M)$$

$$y = r \cdot \cos(2\pi k/M)$$

wherein

M is the number of light sources,
r is the radius defined as the distance of the light sources to the barycentre of the target, and
k is an integer number belonging to the range {0, ...., M - 1}.

In this optimal configuration, as visible in Fig. 10, the light sources are disposed in multi-points star configuration. In this configuration, in a preferred embodiment, at least one light source (does not matter which one) lies in a plane different from the plane in which the remaining light sources lie.

In this optimal configuration, the radius of the target can be chosen depending on the application. The distance between the two planes of the light sources depends on the application and/or on the chosen radius. In one preferred embodiment, the radius is in the range 1 mm - 50 mm, e.g. 15 mm. In one preferred embodiment, the distance is in the range 1 mm - 20 mm, e.g. 5 mm.

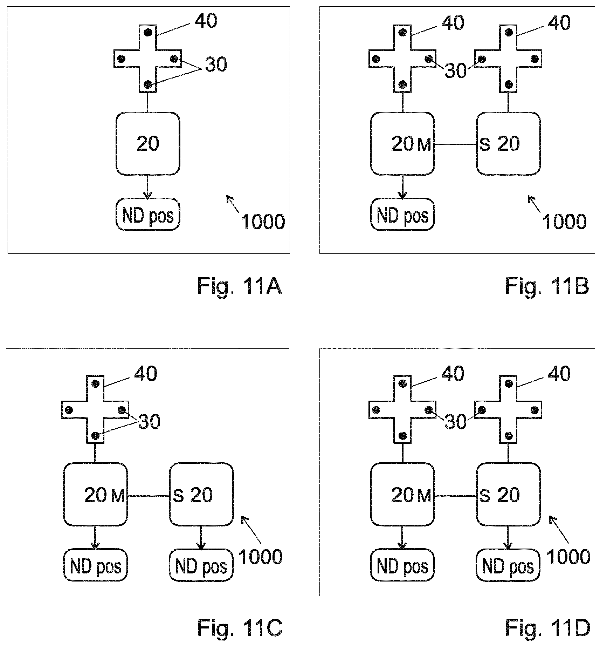

Figs. 11A to 11D show in a schematic way four possible configurations of the positioning system according to the invention.

In all the examples of Figs. 11A to 11D, the sensor 30 is a shadow sensor. In one preferred embodiment, the mask of each of those shadow sensor is the mask 23 illustrated in Fig. 3B, wherein the distinctive element is the cross 232 corresponding to the absence of the illustrated repetitive elements (the points or squares 230).

The positioning system illustrated in Fig. 11A comprises one target 40 having a cross-shape and comprising four light sources 30 at the end of the four arms of the cross, one sensor 20, e.g. a shadow sensor. An external processor (not illustrated) and an external machine-learning module (not illustrated) allow to compute the ND position of the target 40 with regard to the shadow sensor 20.

The positioning system illustrated in Fig. 11B comprises two targets 40 having a cross-shape, each target 40 comprising four light sources 30 at the end of the four arms of the cross, two sensors 20, e.g. two shadow sensors. Each shade sensor is associated with a target 40. One shadow sensor 20 acts as master (M) and the other one as a slave (S), in a master-salve configuration. For example, the shadow sensor 20 acting as master (M) indicates to the shadow sensor 20 acting as a slave (S) when to take images from the light sources 30. An external processor (not illustrated) and an external machine-learning module (not illustrated) allow to compute the ND position of the targets 40 with regard to the shadow sensor 20 acting as a master (M) and/or with regard to the shadow sensor 20 acting as a slave (S).

The positioning system illustrated in Fig. 11C comprises one target 40 having a cross-shape and comprising four light sources 30 at the end of the four arms of the cross, two sensors 20, e.g. two shadow sensors. One shadow sensor 20 acts as master (M) and the other one as a slave (S), in a master-salve configuration. The shadow sensor acting as a master is associated with the target 40. An external processor (not illustrated) and an external machine-learning module (not illustrated) allow to compute the ND position of the target 40 with regard to the shadow sensor 20 acting as a master (M) and/or with regard to the shadow sensor 20 acting as a slave (S).

The positioning system illustrated in Fig. 11D comprises two targets 40 having a cross-shape, each target 40 comprising four light sources 30 at the end of the four arms of the cross, two sensors 20, e.g. two shadow sensors. Each shade sensor is associated with a target 40. One shadow sensor 20 acts as master (M) and the other one as a slave (S), in a master-salve configuration. An external processor (not illustrated) and an external machine-learning module (not illustrated) allow to compute the ND position of the targets 40 with regard to the shadow sensor 30 acting as a master (M) and/or with regard to the shadow sensor 20 acting as a slave (S). A processor (not illustrated) and a machine-learning module (not illustrated) in the shadow sensor 30 acting as a slave can allow to compute the ND position of the other target 40 with regard to the shadow sensor 30 acting as a slave.

The configurations of the positioning system of Figs. 11A to 11D are not limitative and other configurations can be imagined by the skilled person.

**Claims**

1. A positioning system (1000) for determining a calibrated N degrees of freedom position of an object, N being an integer number at least equal to three, said positioning system comprising:

   - M light source(s) (30, 32),
   - P sensor(s) (20), configured to sense light emitted from the light source(s) (30, 32) or to sense shadow(s) cast on the sensor(s) (20) by light emitted from the light source(s) (30, 32),

   wherein M and P are integer numbers, M is equal to at least one if P is equal to at least two, and M is equal to at least three if P is equal to at least one,

   - a processor (50) configured to:

     - determine two degrees of freedom position(s) corresponding to each of the light source(s) (30, 32) based on the sensed light(s) or shadow(s); and

     - a machine learning module (10) configured to:

       - compute a N degrees of freedom position of the object, said object being or comprising said light source(s) (30, 32) or said sensor(s) (20), based on the two degrees of freedom position(s).

2. The positioning system of claim 1, said sensor (20) being a single sensor or a stereo sensor, said number of light sources (30, 32) being equal to four or to five.

3. The positioning system of one of claims 1 to 2, the system comprises several light sources (30, 32), a first sub-set of the light sources (30) lying on a first plane, and a second sub-set of the light sources (32), different from the first sub-set, lying on a second plane different from the first plane, the second subset comprising at least one light source (32).

4. The positioning system of one of claims 1 to 3, comprising a target (40), said target comprising the light source(s) (30, 32), said positioning system being arranged to compute a N degrees of freedom position of said target (40).

5. The positioning system of claim 4, wherein the x and y coordinates of the light sources are given by the following formula:

$$x = r \cdot \sin(2\,\pi k/M)$$

$$y = r \cdot \cos(2\,\pi k/M)$$

   wherein

   M is the number of light sources,
   r is the defined as the distance of the light sources to the barycentre of a target (40), and
   k is an integer number belonging to the range {0, ...., M - 1}.

6. The positioning system of one of claims 1 to 5, wherein said sensor (20) is a shadow sensor configured to sense shadows cast on the shadow sensor by light emitted from the light source(s) (30, 32), each shadow sensor comprising an imager (25).

7. The positioning system of claim 6, wherein the processor (50) is configured to:

   - determine the two degrees of freedom position(s) from two projection of points ($V_x$, $V_y$), each projection being a projection of a shadow image on the imager (25) into one dimension.

8. The positioning system of one of claims 1 to 5, wherein said sensor (20) is a camera, e.g. a pin-hole camera or a projective camera.

9. The positioning system of one of claims 1 to 8, wherein said machine learning module (10) is a supra machine learning module, wherein the M light source(s) (30, 32) belong to a given volume (V), wherein said volume (V) comprises several sub-volumes (C), wherein the positioning system further comprises several local machine learning modules, one for at least one sub-volumes (C), each local machine learning module being configured to compute a N degrees of freedom position of the object based on the determined 2D positions.

10. The positioning system of claim 9, said supra machine-learning module being arranged to learn which sub-volume it should select, by performing in a first step a coarse positioning and then, in a second step after the first step, the local machine-learning module of the selected sub-volume performs a fine positioning.

11. The positioning system of one of claims 1 to 10, wherein said sensor is a stereo-sensor, wherein said machine-learning module is a first machine-learning module, the positioning system further comprising a second machine-learning module different from the first and arranged to compute the N degrees of freedom position of one sensor of the stereo sensor with regard to the other sensor of the stereo sensor.

12. The positioning system of one of claims 1 to 11, said machine learning module being a neural network module, preferably a deep neural network module.

13. The positioning system of claim 12, wherein an activation function of the neural network module is a ReLu function or rectifier and/or wherein a training function of the neural network module is a Bayesian regression.

14. The positioning system of one of claims 1 to 13, said light source(s) (30, 32) being an active light source, e.g. a LED.

15. The positioning system of one of claims 1 to 14, said light source(s) (30, 32) being a passive light source, e.g. a reflective element.

16. A positioning method for determining a calibrated N degrees of freedom position of an object, N being an integer number at least equal to three, by using a positioning system (1000), said positioning system (1000) comprising:

- M light source(s) (30, 32),
- P sensor(s) (20), configured to sense light emitted from the light source(s) (30, 32) or to sense shadow(s) cast on the sensor(s) (20) by light emitted from the light source(s) (30, 32),

wherein M and P are integer numbers, M is equal to at least one for P being equal to at least two, and M is equal to at least three for P being equal to at least one,

- a processor (50),
- a machine learning module (40),

the method comprising the following steps:

- determining by said processor (50) two degrees of freedom position(s) corresponding to each of the light source(s) (30, 32) based on the sensed light(s) or shadow(s);
- computing by said machine learning module (10) a N degrees of freedom position of the object, said object being or comprising said light source(s) or said sensor(s), based on the determined two degrees of freedom position(s).

Fig. 1

Fig. 2

Fig. 3A

Fig. 3B

10

IN
(2D)  →  OUT
(3D/6D)

Fig. 4

100  $w_i$  100  $w_i$  10

IN  →  OUT

L-IN   L1   L2   Li   L-OUT

Fig. 5

10'  10

IN'
( ) ( )
$V_x$ $V_y$  →  IN
(2D)  →  OUT
(3D/6D)

Fig. 6

10"

IN'
( ) ( )
$V_x$ $V_y$  →  OUT

Fig. 7

Fig. 8A

Fig. 8B

Fig. 9A

Fig. 9B

Fig. 10

Fig. 11A

Fig. 11B

Fig. 11C

Fig. 11D

Europäisches
Patentamt

European
Patent Office

Office européen
des brevets

## EUROPEAN SEARCH REPORT

**Application Number**

EP 18 16 8583

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/120763 A1 (GRENET ERIC [CH] ET AL) 16 May 2013 (2013-05-16) | 1,6,14, 16 | INV. G01B11/24 |
| Y | * paragraphs [0016], [0040], [0041], [0057]; figures 1-16 * | 1-16 | G01B11/00 |
| X | US 2017/276472 A1 (BECKER BERND-DIETMAR [DE] ET AL) 28 September 2017 (2017-09-28) | 1,16 | |
| Y | * paragraph [0116]; figure 1 * | 1-16 | |
| X | US 2003/011787 A1 (CHO HYUNG SUCK [KR] ET AL) 16 January 2003 (2003-01-16) | 1,16 | |
| Y | * paragraph [0011]; figures 1-8 * | 1-16 | |
| Y | US 2008/111985 A1 (BRIDGES ROBERT E [US]) 15 May 2008 (2008-05-15) * the whole document * | 1-16 | |
| Y | JP 2006 159359 A (TOYOTA MOTOR CORP) 22 June 2006 (2006-06-22) * the whole document * | 1-16 | TECHNICAL FIELDS SEARCHED (IPC) |
| Y | CN 101 169 320 A (UNIV BEIJING JIAOTONG [CN]) 30 April 2008 (2008-04-30) * the whole document * | 1-16 | G01B G01C G01S |

The present search report has been drawn up for all claims

| Place of search | Date of completion of the search | Examiner |
|---|---|---|
| Munich | 27 August 2018 | Grand, Jean-Yves |

**ANNEX TO THE EUROPEAN SEARCH REPORT**
**ON EUROPEAN PATENT APPLICATION NO.**

EP 18 16 8583

This annex lists the patent family members relating to the patent documents cited in the above-mentioned European search report.
The members are as contained in the European Patent Office EDP file on
The European Patent Office is in no way liable for these particulars which are merely given for the purpose of information.

27-08-2018

| Patent document cited in search report | | Publication date | Patent family member(s) | | Publication date |
|---|---|---|---|---|---|
| US 2013120763 | A1 | 16-05-2013 | EP | 2593755 A2 | 22-05-2013 |
| | | | KR | 20140025292 A | 04-03-2014 |
| | | | US | 2013120763 A1 | 16-05-2013 |
| | | | WO | 2012007561 A2 | 19-01-2012 |
| US 2017276472 | A1 | 28-09-2017 | DE | 112016002057 T5 | 25-01-2018 |
| | | | GB | 2555027 A | 18-04-2018 |
| | | | JP | 2018515774 A | 14-06-2018 |
| | | | US | 2016327383 A1 | 10-11-2016 |
| | | | US | 2017276472 A1 | 28-09-2017 |
| | | | WO | 2016179448 A1 | 10-11-2016 |
| US 2003011787 | A1 | 16-01-2003 | JP | 3522710 B2 | 26-04-2004 |
| | | | JP | 2002340519 A | 27-11-2002 |
| | | | KR | 20020082977 A | 01-11-2002 |
| | | | US | 2003011787 A1 | 16-01-2003 |
| US 2008111985 | A1 | 15-05-2008 | CN | 101427153 A | 06-05-2009 |
| | | | EP | 2008120 A2 | 31-12-2008 |
| | | | JP | 5127820 B2 | 23-01-2013 |
| | | | JP | 2009534658 A | 24-09-2009 |
| | | | US | 2008111985 A1 | 15-05-2008 |
| | | | WO | 2007124010 A2 | 01-11-2007 |
| JP 2006159359 | A | 22-06-2006 | JP | 4525325 B2 | 18-08-2010 |
| | | | JP | 2006159359 A | 22-06-2006 |
| CN 101169320 | A | 30-04-2008 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012007561 A
- EP 3045932 A
- EP 3054311 A
- US 5617490 A
- US 5832106 A